Europäisches Patentamt

European Patent Office

Office européen des brevets

(19)

(11) Numéro de publication: **0 296 529**
**A1**

## DEMANDE DE BREVET EUROPEEN

(21) Numéro de dépôt: **88109839.6**

(22) Date de dépôt: **21.06.88**

(51) Int. Cl.⁴: **H02P 9/04**

(30) Priorité: **25.06.87 FR 8708953**

(43) Date de publication de la demande:
**28.12.88 Bulletin 88/52**

(84) Etats contractants désignés:
**AT BE CH DE ES FR GB IT LI NL SE**

(71) Demandeur: **CGEE ALSTHOM Société anonyme dite:**
**13, rue Antonin Raynaud**
**F-92309 Levallois-Perret(FR)**

(72) Inventeur: **Martineau, Charles**
**2, rue Molière**
**F- 91380 Chilly Mazarin(FR)**

(74) Mandataire: **Weinmiller, Jürgen et al**
**Lennéstrasse 9 Postfach 24**
**D-8133 Feldafing(DE)**

(54) **Dispositif de réglage de vitesse pout alternateur entraîné par une turbine hydraulique.**

(57) Dispositif de réglage de vitesse pour alternateur (1) entraîné par une turbine hydraulique (2)et conjointement contrôlé par l'intermédiaire d'un organe de réglage (3) apte à moduler l'énergie reçue par la turbine, ainsi que par un réseau électrique absorbeur (5) réglable, connecté en sortie de l'alternateur en parallèle à un réseau d'utilisation (4) indépendant qu'est chargé d'alimenter ledit alternateur.

Le dispositif comporte des moyens pour déterminer un premier écart existant entre la puissance fournie à un instant donné par l'eau au groupe que forme la turbine et l'alternateur donné et la puissance que fournira l'eau au groupe en régime établi pour la position de l'organe de réglage au même moment ; des moyens pour déterminer un second écart existant entre la puissance fournie par la turbine et la puissance électrique consommée ; des moyens de comparaison entre premier et second écart simultanément déterminés qui agissent sur l'organe de réglage à l'ouverture ou à la fermeture suivant celui des deux écarts simultanément mesurés qui est le plus grand et ce jusqu'à égalité desdits écarts.

FIG.1

EP 0 296 529 A1

**Dispositif de réglage de vitesse pout alternateur entraîné par une turbine hydraulique**

La présente invention concerne un dispositif de réglage de vitesse pour alternateur qui est entraîné par une turbine hydraulique, qui alimente un réseau d'utilisation indépendant et qui est conjointement contrôlé par l'intermédiaire d'un organe de réglage, agissant directement ou indirectement sur la turbine, et d'un réseau absorbeur auxiliaire réglable connecté en sortie de l'alternateur en parallèle avec le réseau d'utilisation.

De manière connue, les variations de consommation d'un réseau d'utilisation indépendant sont susceptibles de conduire à des variations de vitesse de l'alternateur d'alimentation de ce réseau, lorsque la puissance demandée à cet alternateur diffère de celle qui lui est fournie par l'élément moteur qui l'entraîne.

Une solution classique avec les réseaux d'utilisation ne requérant qu'une puissance relativement limitée, consiste à connecter un réseau absorbeur auxiliaire réglable en parallèle avec le réseau d'utilisation aux bornes de l'alternateur, notamment lorsque l'alternateur est entraîné par une turbine hydraulique bénéficiant d'une alimentation régulière et permanente en eau. La turbine est alors commandée de manière à fournir une puissance constante à l'alternateur, qui alimente à la fois le réseau principal d'utilisation et le réseau absorbeur auxiliaire avec une puissance constante que les dux réseaux se partagent en fonction des besoins des utilisateurs branchés sur le réseau principal. Cette solution est coûteuse en matériel puisque le réseau auxiliaire doit être dimensionné pour absorber la puissance fournie par l'alternateur qui n'est pas consommée par le réseau principal d'utilisation, de plus l'alternateur et sa turbine sont inutilement exploités à pleine charge. Une telle solution n'est pas acceptable lorsque les réserves en eau sont limitées et demandent à être exploitées à bon escient.

En conséquence on cherche à agir sur la turbine hydraulique d'entraînement de l'alternateur et plus précisément à moduler l'énergie qu'elle reçoit pour absorber les variations de consommation électrique se produisant à l'intérieur du réseau d'utilisation.

Toutefois le réglage de vitesse du groupe, composé par un alternateur accouplé à une turbine hydraulique, est compliqué par le fait que la réponse en puissance du groupe, à une variation de l'organe de réglage agissant sur la turbine, n'est pas une fonction simple du temps.

Ainsi par exemple la fermeture d'un organe de commande de type vanne d'alimentation en eau d'une turbine, entraîne dans un premier temps une augmentation de la puissance.

Une régulation classique, à composantes respectivement proportionnelle, intégrale et différentielle, n'est alors pas entièrement satisfaisante, ce qui conduit à conserver un réseau absorbeur auxiliaire commutable, chargé d'absorber les surpuissances transitoires.

Pour améliorer la régulation des groupes alimentant des réseaux d'utilisation indépendants dans de telles conditions, la présente invention propose donc un dispositif de réglage de vitesse pour alternateur qui est entraîné par une turbine hydraulique et qui est conjointement contrôlé par l'intermédiaire d'un organe de réglage, apte à moduler l'énergie reçue par la turbine, et d'un réseau électrique absorbeur, réglable, connecté en sortie de l'alternateur en parallèle avec le réseau d'utilisation indépendant qu'est chargé d'alimenter l'alternateur.

Selon une caractéristique de l'invention, le dispositif de réglage de vitesse comporte :
- des moyens pour déterminer un premier écart existant entre la puissance fournie par l'eau au groupe que forme la turbine et l'alternateur à un instant donné et la puissance que doit fournir le groupe en régime établi pour la position présente de l'organe de réglage,
- des moyens pour déterminer un second écart existant la puissance fournie par la turbine et la puissance électrique consommée,
- des moyens de comparaison, entre premier et second écart simultanément déterminés, qui agissent sur l'organe de réglage à l'ouverture ou à la fermeture suivant celui des deux écarts simultanément mesurés qui est le plus grand et ce jusqu'à une égalité correspondant à l'immobilisation dudit organe de commande.

L'invention, ses caractéristiques et ses avantages sont précisés dans la description qui suit en relation avec les figures répertoriées ci-dessous.

La figure 1 présente, schématiquement un groupe d'alimentation en énergie électrique d'un réseau d'utilisation indépendant et la régulation associée dont fait partie le dispositif de réglage de vitesse selon l'invention.

La figure 2 présente un schéma de principe permettant de définir les caractéristiques du circuit hydraulique d'alimentation d'une turbine.

La figure 3 présente un exemple de schéma d'un élément permettant de déterminer l'écart ente la puissance fournie par l'eau à un instant donné et la puissance qui sera fournie en régime stable pour la même position de l'organe de réglage.

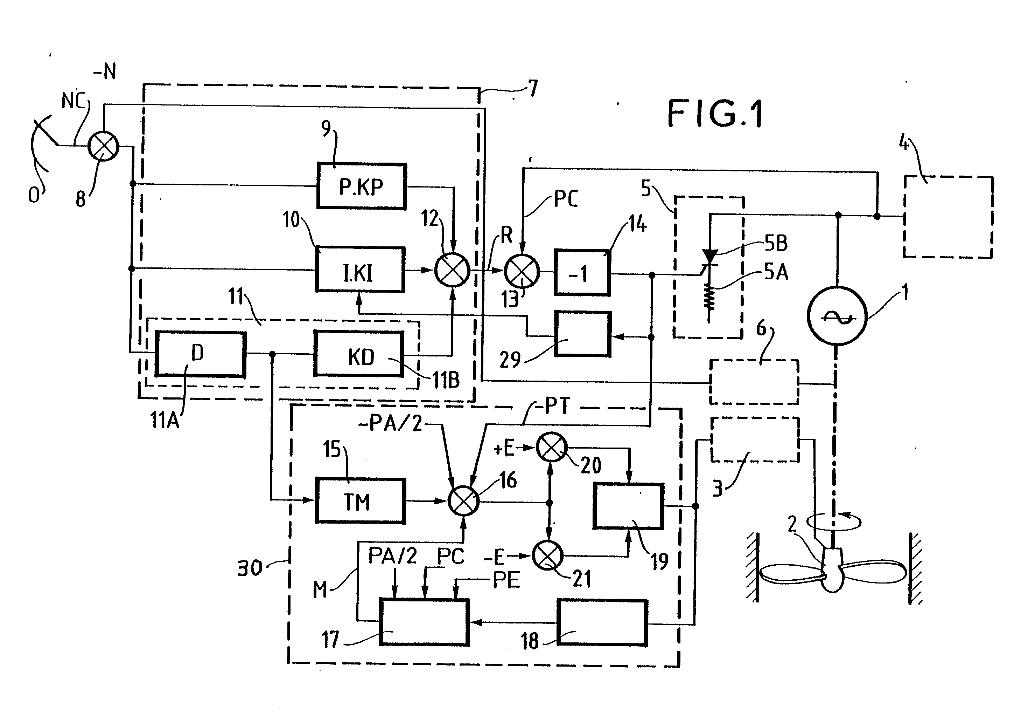

Comme indiqué ci-dessus la figure 1 présente un schéma relatif à un groupe composé d'un alternateur 1 entraîné par une turbine hydraulique 2.

De manière connue, la turbine hydraulique 2 est placée en aval d'une conduite, non figurée, au travers de laquelle lui parvient l'eau sous pression. Cette eau sous pression assure la mise et le maintien en rotation de la turbine 2, un organe de réglage 3 permet de faire varier l'énergie reçue de l'eau par la turbine 2.

L'organe de réglage 3 est éventuellement un organe agissant sur le pas des pales de turbine, un distributeur ou un organe de type vanne, ce qui permet de faire varier la puissance fournie par la turbine 2 en agissant sur le débit d'eau en sortie de conduite. Ceci permet d'économiser l'eau lorsque la puissance demandée à l'alternateur 1 est inférieure à sa puissance nominale.

En première approximation dans le cadre du procédé de réglage de vitesse selon l'invention on ne différencie pas un organe de réglage de pas de turbine d'un organe de commande sur la conduite, les effets du réglage étant identiques.

L'alternateur 1 est destiné à alimenter un réseau d'utilisation 4 indépendant susceptible de consommer une puissance PC variable en fonction des besoins des utilisateurs rattachés à ce réseau. Un réseau absorbeur, auxiliaire, réglable 5 est connecté aux bornes de sortie de l'alternateur 1 en parallèle avec le réseau d'utilisation 4 afin de compenser les variations rapides de consommation survenant dans le réseau d'utilisation, vis-à-vis de l'alternateur de manière que ce dernier ait une charge la plus constante possible.

Dans l'exemple proposé, le réseau absorbeur 5 est composé d'éléments résistifs symbolisés par une résistance 5A dont l'alimentation est assurée par l'alternateur au travers de thyristors, symbolisés par le thyristor 5B. Ces thyristors permettent une rapide augmentation ou diminution de charge aux bornes de l'alternateur 1 par exemple par réglage de phase.

La commande des thyristors du réseau absorbeur 5 est assurée en fonction d'une part d'une valeur régulée R fonction de l'écart existant entre une consigne de vitesse NC prédéterminée pour le groupe formé par l'alternateur 1 et la turbine 2 et un signal N représentatif de la vitesse de ce groupe, obtenue par mesure, par exemple au moyen d'un tachymètre 6, d'autre part en fonction d'un signal PC représentatif de la puissance consommée par le réseau d'utilisation 4.

La valeur régulée R est fournie par un régulateur de vitesse 7, de type à action proportionnelle, intégrale, différentielle placé en sortie d'un sommateur 8 recevant la consigne de vitesse NC par exemple d'un potentiomère O et le signal N affecté d'un signe moins.

Le régulateur de vitesse 7 comprend par exemple un élément 9 correspondant au terme proportionnel P.KP, un élément 10 correspondant au terme intégral I.KI et un élément 11 correspondant au terme différentiel D.KD, ces trois éléments étant reliés aux entrées d'un sommateur 12 qui fournit la valeur régulée R.

Le signal PC représentatif de la puissance consommée par le réseau d'utilisation 4 est appliqué à une entrée d'un sommateur 13 dont la seconde entrée reçoit la valeur régulée R.

Ce signal PC est exploité de manière à réagir immédiatement à toute modification de consommation au niveau du réseau d'utilisation en agissant sur le réseau absorbeur 5 de manière à ramener la consommation globale des deux réseaux 4 et 5 à sa valeur antérieure d'équilibre sans attendre que la vitesse du groupe ait diminué. A cet effet la commande des thyristors, tels que 5B, est commandé par le comparateur 13 via un élément 14 correspondant à un facteur de valeur moins un.

Le régulateur de vitesse 7 permet quant à lui de prendre en compte les variations de vitesse du groupe formé par l'alternateur 1 et sa turbine 2, soit sous l'action de la charge appliquée à ce groupe, imparfaitement compensée par l'action précédente, soit par des variations de la puissance produite par la turbine. Ce régulateur de vitesse 7 agit en conséquence sur la commande des thyristors via l'élément 14 de manière à augmenter ou diminuer la consommation du réseau absorbeur 5 suivant le signe de la variation de vitesse qui a été détectée.

Un élément de désaturation 29 qui ne sera pas développé ici est relié entre la sortie de l'élément 14 et une entrée de l'élément 10 de manière à réagir sur le terme intégral pour tenir compte du fait que la puissance de dissipation du réseau absorbeur 5 est inférieure à la puissance susceptible d'être fournie par l'alternateur 1 et qu'en conséquence la plage de réglage du réseau absorbeur est bornée, l'arrivée en limite de plage devant donc être prise en compte par le régulateur de vitesse 7.

L'élément 11 est ici composé de deux modules 11A et 11B définissant le terme différentiel D.KD dans lequel D fournit la dérivée de la vitesse du groupe composé de l'alternateur 1 et de sa turbine, c'est-à-dire son accélération.

On sait d'autre part que si l'on connaît le temps spécifique TM du groupe, le produit D.TM correspond à l'écart existant à un instant donné entre le couple moteur et le couple résistant appliqués au groupe.

Selon l'invention on applique le résultat de ce produit D.TM, dont les termes sont fournis respective-

EP 0 296 529 A1

ment par le module 11A et par un élément 15 correspondant au terme TM qui sont placés en série à une entrée d'un sommateur 16 chargé de piloter l'organe de commande 3 de turbine dans le cadre d'un régulateur 30 affecté à cet organe.

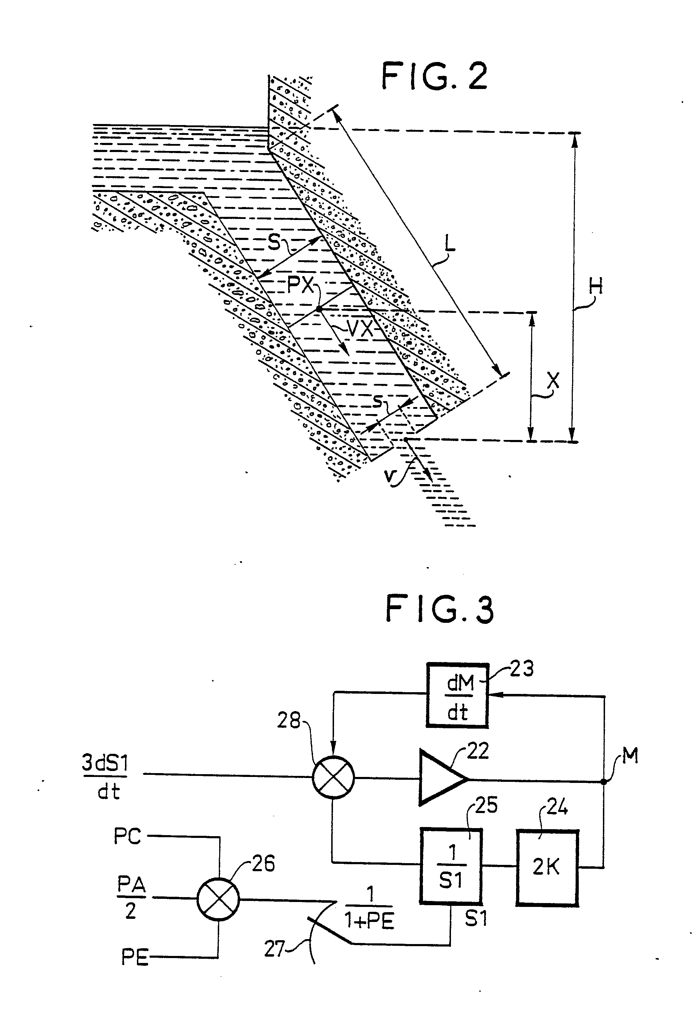

Une seconde entrée du sommateur 16 reçoit un signal de correction de conduite M obtenue par le calcul de l'écart entre la puissance réellement fournie par l'eau et la puissance destinée à être fournie par l'eau en régime établi en fonction de la position de l'organe de commande 3. Le signal de correction de conduite M est fourni par un élément 17 dont un exemple de réalisation est donné par la figure 2. Cet élément 17 reçoit le signal PC représentatif de la puissance consommée par le réseau d'utilisation, une indication PA/2 correspondant à la demi-puissance nominale d'absorption du réseau absorbeur et une valeur PE correspondant à une estimation des pertes à la vitesse nominale de la machine. L'élément 17 reçoit aussi une indication DS image de la dérivée de la position de l'organe de réglage, c'est-à-dire de sa vitesse.

L'indication DS est obtenue par exemple par un élément dérivateur 18 à partir du signal de position de l'organe de réglage 3, à l'ouverture ou à la fermeture, que fournit un circuit d'actionnement 19 classique, elle est préférablement fournie directement par la commande en vitesse de cet organe de réglage.

Le circuit d'actionnement 19 est connecté en sortie de deux comparateurs 20 et 21 recevant simultanément le signal de sortie de l'ensemble comparateur 16 et séparément chacun l'une des consignes de seuil +E ou -E définissant les limites inférieures d'actionnement de l'organe de commande 3 par le circuit 19.

Le sommateur 16 reçoit également en entrée une valeur de consigne correspondant à la valeur -PA/2 sachant que PA est la puissance nominale d'absorption du réseau absorbeur 5 et un signal correspondant à la valeur -PT, sachant que PT est la puissance réellement consommée par le réseau absorbeur et que cette valeur est déduite du signal de commande des thyristors que fournit l'élément 14.

Si l'on veut, par économie d'eau, limiter le débit par rapport à la puissance électrique demandée à l'alternateur et par économie de matériel, limiter la puissance du réseau absorbeur 5, il faut manoeuvrer l'organe de commande 3 pour ramener la puissance absorbée à environ la moitié de la puissance du réseau absorbeur, afin d'avoir la même marge de manoeuvre en perte de charge ou en prise de charge. L'exploitation de l'organe de réglage 3 en tant que moyen de réglage de la vitesse du groupe en fonction de sa charge permet aussi de réduire la puissance nominale du réseau absorbeur 5 suivant les caractéristiques du groupe , de la structure de la conduite et des performances de l'alternateur 1. Selon l'invention, on cherche à prévoir la production d'énergie que l'on veut atteindre de manière à commander en conséquence l'organe de réglage 3 et à l'arrêter lorsque cet organe de commande est en une position correspondant à la production recherchée, et cela même si la production réelle ne lui correspond pas encore.

Dans l'explication qui suit on définit la position de l'organe de réglage 3 par la section "s" de l'ouverture par laquelle l'eau s'échappe pour actionner la turbine 2 dans le cas d'un organe de type vanne, ou par équivalence la section d'ouverture de pales dans le cas d'une turbine à organe de réglage du type à réglage de pas -voir figure 3-.

De manière connue, si l'on suppose que la turbine 2 est actionnée par l'eau d'une conduite de hauteur H, de longueur L et de section S fermée à sa base par un organe de réglage de section s variant entre la valeur O correspondant à la fermeture de la vanne et la section SN correspondant à une ouverture maximale, on peut écrire classiquement que $g.x + V^2/2 + \frac{p_x}{m} = C_m$

avec m Masse spécifique de l'eau,

$C_m$ énergie de l'eau par unité de masse en un point de la conduite,

V vitesse de l'eau dans la conduite de section S,

Px la pression à une hauteur x dans la conduite,

x étant mesurée depuis la base de la conduite supposée en pente.

En bas de conduite, l'organe de réglage 3 présentant une section d'ouverture s permet le passage de l'eau avec une vitesse v en régime établi, on a donc l'équation $v^2 = 2g.h$ qui donne la vitesse de l'eau à l'air libre

La pression PO à l'intérieur de la conduite pour x voisin de zéro s'établit à partir des deux équations précédentes sous la forme $PO = m (v^2 - V^2)/2$.

De même pour x voisin de H à section S on obtient $PH = -mV^2/2$.

L'application de l'axiome de Newton à la masse d'eau en mouvement dans la conduite permet d'écrire que :

$PH.S - PO.S + m.g.H.S. = L.S.m.dV/dt$

que l'on peut écrire sous la forme

$dV/dt = (g.H - v^2.2)/L$

4

en remplaçant PO et PH par leurs valeurs.

On peut d'autre part écrire l'équation V.S = v.s avec s fonction du temps t.

L'accélération de l'eau dans la conduite en régime établi s'écrit en conséquence :

$$\frac{dV}{dt} = \frac{s}{S} \times \frac{dv}{dt} + \frac{v}{S} \times \frac{ds}{dt}$$

d'où l'on sait déduire l'accélération de l'eau en régime établi, en sortie d'organe de réglage soit :

$$\frac{dv}{dt} = \frac{S}{s} \cdot \frac{dV}{dt} - \frac{v}{s} \cdot \frac{ds}{dt}$$

ou encore :

$$\frac{dv}{dt} = \frac{(g.h - v^2/2) \cdot S/L - v.ds/dt}{s}$$

équation dont la solution n'est pas évidente et qui conduirait à effectuer un calcul pas à pas si l'on devait faire une simulation.

Pour définir les fonctions de transfert de l'ensemble formé par le dispositif selon l'invention comprenant essentiellement les éléments 15 à 18, on se rapporte aux valeurs nominales pour les termes définis ci-dessus ; en particulier soit

v = V1.VN et s = S1.SN avec VN = $\sqrt{2g.H}$ et SN section de l'organe de commande permettant d'obtenir, à partir de l'eau et au niveau de la turbine 2, la puissance PM nécessaire pour produire au niveau de l'alternateur 1 la puissance nominale PN à vitesse nominale NN.

L'accélération de l'eau au niveau de l'ouverture de l'organe de commande 3 s'écrit aussi $\frac{dv}{dt} = \frac{dV1}{dt}$ . VN

on a de même $\frac{ds}{dt} = \frac{dS1}{dt}$ . SN

ce qui permet d'établir que

$$\frac{dV1}{dt} \cdot VN = \frac{(g.H - V1^2.VN^2/2) \cdot S/L - V1.VN.SN.d\ S1/dt}{S1.SN}$$

La puissance fournie par l'eau pour avoir la puissance nominale de l'alternateur à vitesse nominale s'écrit aussi

PM = M.V²/2 = m.SN.VN³/2 que l'on peut écrire sous la forme PM = SN.VN³/2 pour m = 1    PM étant donné en kilowatts

De ce fait on en déduit que :

$$\frac{dV1}{dt} = \frac{(g^2.H^2\ (1-V1^2)}{S1 \times PM \times L/S} \cdot - \frac{V1.}{S1} \cdot \frac{dS1}{dt}$$

que l'on peut écrire :

$$\frac{dV1}{dt} = \frac{K\ (1-V1^2) - V1.\ dS1/dt}{S1}$$

dans lequel figure une constante

$$K = \frac{g^2.H^2}{PM.L/S} = \frac{\sqrt{2gH}}{2.SN.L/S}$$

. dont les éléments sont constitués par les éléments de l'installation définie plus haut en relation avec la figure 2.

Si comme on l'a vu précédemment on appelle M l'écart existant entre la puissance fournie par l'eau à la turbine 2 et la position de l'organe de commande 3 définie par sa section S1, on peut écrire : M =

$S_1 V_1^3 - S_1$ qui, dans les conditions de réglage de vitesse d'un groupe avec la régulation telle que schématisée en figure 1, est telle que l'on a une faible amplitude de variation de vitesse. Ceci permet de considérer que M est peu différent de 3$S_1$ $V_1$-1) et la différentielle de l'écart M en fonction du temps est donc telle que l'on ait :

$$\frac{dM}{dt} = 3 \left( S_1 \cdot \frac{dV_1}{dt} + V_1 \cdot \frac{DS_1}{dt} \right) - \frac{3dS_1}{dt}$$

Dans cette équation on peut remplacer $\frac{dV_1}{dt}$ par sa valeur telle que définie plus haut en relation avec la constante K soit :

$$\frac{dV_1}{dt} = \frac{K(1-V_1^2) - V_1 \cdot dS_1/dt}{S_1}$$

dans laquelle K $(1 - V_1^2)$ est peu différent de 2K (1-V1) dans les limites considérées ci-dessus.
En conséquence

$$\frac{S_1 \cdot dV_1}{dt} + \frac{V_1 \cdot dS_1}{dt} = 2K(1-V_1)$$

qui réintroduit dans la formule $\frac{dM}{dt}$ ci-dessus et en prenant de plus (1-V1) = -M/3S1 à partir de la formule approchée de M, donne donc

$$\frac{dM}{dt} = \frac{-2K \cdot M}{S_1} - \frac{3dS_1}{dt}$$

Il devient alors possible de modéliser cette dernière formule en définissant les fonctions de transfert conduisant à l'écart M. Tout dispositif analogique, numérique ou programmé capable de réaliser classiquement est algorithme convient, tel le dispositif analogique schématisé en figure 3.

L'écart M est alors fourni par un amplificateur opérationnel 22 dont la sortie est rebouclée sur l'entrée via d'une part un élément 23 correspondant au terme différenciateur dM/dt d'autre part deux éléments 24 et 25 dont l'un est un multiplicateur par K qui fournit donc le terme 2 KM et l'autre un diviseur par S1 qui reçoit d'une part le terme 2 KM d'autre part un équivalent de S1, ce terme S1 n'étant normalement pas directement accessible.

A cet effet on remplace la valeur actuelle du terme S1 à un instant donné par la valeur que prendra ce terme à l'équilibre, cette valeur étant définie par l'équation S1 = (PC + PA/2 + PE) / (1 + PE) ramenée aux valeurs nominales, sachant que PE est une valeur qui correspond aux pertes à la vitesse nominale et qui est ramenée à la puissance nominale. Un sommateur 26 additionne les facteurs PA/2, PC et PE pour fournir le résultat à un potentiomètre 27 appliquant le coefficient 1/1 + PE à ce résultat. Ce potentiomètre fournit un équivalent de S1 à l'élément diviseur 25.

Ce dernier fournit le terme de contre-réaction 2KM/S1 à un sommateur 28 recevant par ailleurs la dérivée dM/dt de l'élément 23 et d'autre part la dérivée 3dS1/dt.

L'approximation sur la valeur de S1 est pratiquement sans importance dans la mesure où en raison de la modélisation choisie l'écart tend naturellement à se réduire après une modification de la consommation en raison de l'influence prépondérante du facteur dS1/dt et auxiliairement du facteur dM/dt.

En replaçant dans le cadre de la figure 1, le modèle de la figure 2, on voit clairement que toute modification de la consommation suffisamment significative pour affecter la vitesse du groupe alternateur 1 - turbine 2 entraîne une réaction immédiate sur le réseau absorbeur 5 via un signal -PT tendant à prévenir une variation de vitesse du groupe par une action antagoniste sur la consommation du réseau absorbeur dans les limites de celui-ci.

Pour toute variation de consommation du réseau absorbeur relativement à sa valeur de consigne PA/2 constatée au niveau sommateur 16, le régulateur 30 d'organe de réglage 3 intervient.

Le régulateur 30 prend en compte d'une part un premier écart entre la puissance électrique consommée et la puissance hydraulique produite correspondant au couple accélérateur appliqué aux masses tournantes du groupe, cet écart est obtenu à partir de la dérivée de la vitesse de rotation de ce groupe, via l'élément 15. Le régulateur 30 prend aussi en compte un second écart défini par le signal de correction M qui lui fournit l'élément 17, ce second écart correspondant à celui existant entre la puissance fournie au groupe à un instant donné et la position de réglage de l'organe de commande 3 qui représente la puissance qui sera fournie en régime stable. La différence entre ces deux écarts affecté de l'écart existant entre la consommation du réseau absorbeur et son point de consigne PA/2, qui est la valeur médiane fournit la consigne de commande de positionnement de l'organe de réglage autour de sa position médiane et permet de fixer la position de cet organe suite à une variation de charge ou de vitesse, bien avant que le régime qui en découle ne soit stabilisé.

**Revendications**

1/ Dispositif de réglage de vitesse pour alternateur (1) entraîné par une turbine hydraulique (2) et conjointement contrôlé par l'intermédiaire d'un organe de réglage (3) apte à moduler l'énergie reçue par la turbine, ainsi que par un réseau électrique absorbeur (5), réglage connecté en sortie de l'alternateur en parallèle à un réseau d'utilisation (4) indépendant qu'est chargé d'alimenter ledit alternateur, ledit dispositif étant caractérisé en ce qu'il comporte :
- des moyens pour déterminer un premier écart (M) existant entre la puissance fournie par l'eau, au groupe que forme la turbine et l'alternateur à un instant donné et la puissance que doit fournir le groupe en régime établi pour la position de l'organe de commande au même instant,
- des moyens pour déterminer un second écart existant la puissance fournie par le turbine et la puissance électrique consommée,
- des moyens de comparaison, entre premier et second écart simultanément déterminés et affectés de l'écart entre la puissance consommée par l'absorbeur et la valeur moyenne de la puissance nominale de l'absorbeur, qui agissent sur l'organe de réglage à l'ouverture ou à la fermeture suivant celui des deux écarts simultanément mesurés qui est le plus grand et ce jusqu'à une égalité desdits écarts, correspondant à une immobilisation de l'organe de réglage.

2/ Dispositif de réglage de vitesse selon la revendication 1, caractérisé en ce que les moyens pour déterminr le premier écart (M) comportent eux-même des moyens de détermination de la vitesse de variation de l'organe de réglage (3) à partir du signal pilotant cet organe et des moyens pour déterminer la puissance fournie par l'eau par sommation des puissances consommées par le réseau absorbeur (5) en régime établi, par le réseau d'utilisation (4) avec les pertes traduites sous forme électrique.

3/ Dispositif de réglage de vitesse selon la revendication 1 pour groupe doté d'un réseau électrique absorbeur (5) qui est contrôlé par un régulateur de vitesse (7), du type à action proportionnelle, intégrale et différentielle en parallèle, caractérisé en ce qu'il comporte un élément multiplicateur (15) recevant un signal correspondant à la dérivée de la vitesse du groupe d'un module dérivateur (11A) du régulateur de vitesse et fournissant un signal image du produit de ladite dérivée de vitesse, à l'instant considéré, par la valeur du temps spécifique (TM) du groupe.

4/ Dispositif de réglage de vitesse selon la revendication 2, caractérisé en ce que les moyens pour déterminer le premier écart (M) comportent un amplificateur opérationnel (22) fournissant en sortie ledit premier écart (M) à partir du signal correspondant à la vitesse de variation de l'organe de réglage appliqué à son entrée et corrigé par deux boucles de contre-réaction fournissant l'une la dérivée par rapport au temps dudit premier écart (M) et l'autre un signal de correction (2KM/S1) incorporant une constante (2K), ledit premier écart (M) et un terme variable (S1) correspondant à la somme de la puissance (PC) consommée par le réseau d'utilisation (4) avec deux valeurs fixées correspondant l'une aux pertes du groupe et l'autre à la moitié de la puissance nominale du réseau électrique absorbeur (5), qui correspond à la position commutée de ce réseau absorbeur en régime établi, lesdites valeurs ci-dessus étant considérées comme ramenées aux valeurs nominales correspondantes.

FIG.1

# FIG. 2

# FIG. 3

Office européen
des brevets

# RAPPORT DE RECHERCHE EUROPEENNE

Numero de la demande

EP  88 10 9839

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 098 047  (THAMESMEAD ENGINEERING LTD) <br> * En entier * | 1 | H 02 P    9/04 |
| A |  | 2-4 | |
| Y | EP-A-0 066 651  (SIEMENS AG) <br> * Figure 2 * | 1 | |
| A | PATENT ABSTRACTS OF JAPAN, vol. 9, no. 131 (E-319)[1854], 6 juin 1985, page 55 E 319; & JP-A-60 16 196 (NIHON DENKI SEIKI K.K.) 26-01-1985 | | |
| A | PATENT ABSTRACTS OF JAPAN, vol. 10, no. 279 (E-439)[2335], 20 septembre 1986, page 16 E 439; & JP-A-61 98 197 (KANSAI ELECTRIC POWER CO., INC.) 16-05-1986 | | |
| A | PATENT ABSTRACTS OF JAPAN, vol. 10, no. 384 (E-466)[2441], 23 décembre 1986, page 63 E 466; & JP-A-61 173 699 (KANSAI ELECTRIC POWER CO., INC.) 05-08-1986 | | DOMAINES TECHNIQUES RECHERCHES (Int. Cl.4) <br><br> H 02 P    9/00 <br> F 03 B   15/00 |

Le présent rapport a été établi pour toutes les revendications

| Lieu de la recherche | Date d'achèvement de la recherche | Examinateur |
|---|---|---|
| LA HAYE | 03-10-1988 | BEYER F. |